# EUROPÄISCHE PATENTANMELDUNG

(11) **EP 0 971 229 A1**
(43) Veröffentlichungstag der Anmeldung: **12.01.2000**
(21) Anmeldenummer: 99113357.0
(22) Anmeldetag: 09.07.1999
(51) Int. Cl.: G01N 27/447

(54) **Verfahren zur Zuführung von Probenmaterial, Probenzuführteil sowie Elektrophoresevorrichtung**

(30) Priorität: 10.07.1998 DE 19830988
(71) Anmelder: LION Bioscience AG, 69120 Heidelberg (DE)
(72) Erfinder: Voss, Hartmut, 69221 Dossenheim (DE); van de Peppel, Jeroen, 69214 Eppelheim (DE)
(74) Vertreter: Schüssler, Andrea, Dr.

(57) **Zusammenfassung**

Die vorliegende Erfindung betrifft ein Verfahren zur Zuführung von Probenmaterial mittels eines Probenzuführteils, das mindestens einen Abschnitt aus porösem Material aufweist und an der einer Probenbearbeitungsvorrichtung zugewandten Seite einen geraden Abschluß hat. Weiter betrifft die Erfindung ein Probenzuführteil sowie eine Elektrophoresevorrichtung.

## Beschreibung

Die vorliegende Erfindung betrifft ein Verfahren zur Zuführung von Probenmaterial mittels eines Probenzuführteils, das mindestens einen Abschnitt aus porösem Material aufweist und an der einer Probenbearbeitungsvorrichtung zugewandten Seite einen geraden Abschluß hat. Weiter betrifft die Erfindung ein Probenzuführteil sowie eine Elektrophoresevorrichtung.

Bei den bisher bekannten Verfahren zum Beladen einer Probenbearbeitungsvorrichtung, insbesondere einer Elektrophorese-Apparatur, wird das aufzutragende Probenmaterial in Taschen eingebracht, die in dem verwendeten Trennmittel, insbesondere dem Gel, ausgebildet worden sind. Geltaschen werden dabei auf zwei Arten erzeugt: (1) Plastikkämme, die Zähne in Form der auszubildenden Geltaschen besitzen, werden als Platzhalter ins unpolymerisierte Gel eingeführt und nach der Polymerisation des Gels herausgezogen oder (2) "Haifischzahnkämme", d.h. Plastikkämme, die die Form der Geltaschenwände besitzen, werden auf das bereits auspolymerisierte Gel aufgesetzt. Gerade die zweite Methode eignet sich aber nur für sehr dünne Gele. Das Beladen der ausgeformten Geltaschen kann per Hand geschehen, d.h. das Probenmaterial wird mit einer Einzel- oder Multipipette aufgenommen und in die Geltaschen eingebracht. Inzwischen gibt es jedoch auch Pipettier-Roboter, die mit einer größeren Genauigkeit den Probenmaterial-Auftrag vornehmen.

Es gibt auch bereits Modifikationen der obigen Gelelektrophoreseverfahren. Bei diesen wird eine Geltasche geformt, in die ein mit der aufzunehmenden Probe getränkter Zahnkamm eingebracht wird (US-A-5,405,516; WO 96/27787). Durch Anlegen von Spannung kommt es zur Abgabe der Probe in das Gel und zur gewünschten Auftrennung der Probe. (Erfle et al., Nucleic Acids Research, 1997, Vol. 25, No. 11, S. 2229-2230).

Allgemein bestehen aber bei den bisher bekannten Methoden der Elektrophorese folgende Probleme:
- aufwendiges Spülen der ausgebildeten Taschen,
- Beschädigung des Trennmittels (Gels), insbesondere wenn ein "Haifischzahnkamm" verwendet wird,
- Diffusion der Proben aus den Taschen und dadurch Einsetzen eines höchst unwillkommenen Vermischvorgangs,
- Beladen schmaler Trennmitteltaschen sehr schwierig,
- schwieriges Einführen des Haifischzahnkamms,
- Beschädigung der Trennmitteltaschen, wodurch weniger Beladungsstellen als ursprünglich beabsichtigt zur Verfügung stehen,
- wenige Beladungsstellen (ca. 20-80), die pro Probenbearbeitung zur Verfügung stehen.

Die Aufgabe der vorliegenden Erfindung besteht deshalb darin, ein Verfahren zur Zuführung von Probenmaterial und dessen Bearbeitung (Analyse) zur Verfügung zu stellen, das die obigen Nachteile vermeidet und insbesondere die Beladungsstellen auf ein Vielfaches des bisher üblichen zu erhöhen.

Diese Aufgabe wird durch ein Verfahren gemäß Patentanspruch 1 sowie ein Probenzuführteil gemäß Patentanspruch 14 und eine Elektrophoresevorrichtung gemäß Patentanspruch 22 gelöst. Vorteilhafte Ausgestaltungen ergeben sich aus den Unteransprüchen.

Inbesondere wird diese Aufgabe durch ein Verfahren zur Zuführung von Probenmaterial mittels eines Probenzuführteils zu einer Probenbearbeitungsvorrichtung gelöst, wobei das Probenzuführteil, das mindestens einen Materialabschnitt aus porösem Material aufweist und an der der Probenbearbeitungsvorrichtung zugewandten Seite einen geraden Abschluß hat, in die Probenbearbeitungsvorrichtung eingeführt wird.

Die Erfindung betrifft auch ein Probenzuführteil zur Durchführung des geschilderten Verfahrens mit wenigstens einem Materialbschnitt aus entsprechend porösem Material und mit einer an einer Probebearbeitungsvorrichtung zugewandten Seite geradem Abschluß.

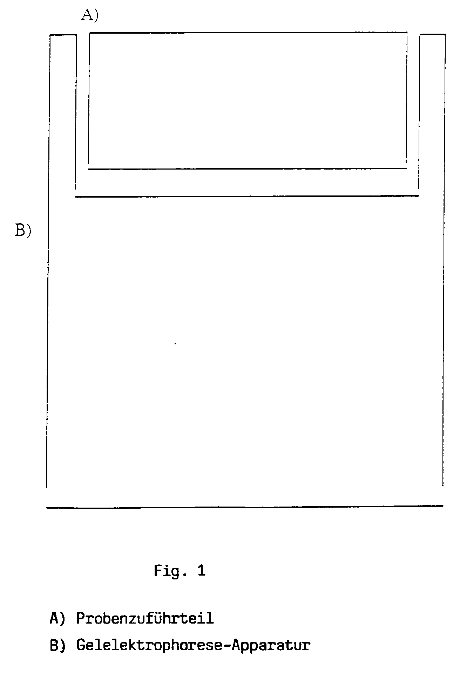

Insbesondere wird die Aufgabe durch ein Probenzuführteil gelöst, das mindestens einen Abschnitt aus porösem Material aufweist und an der Seite, an dem es in die Probenbearbeitungsvorrichtung (z.B. Gelelektrophorese-Apparatur) eingeführtwird, einen geraden Anschluß (eine gerade Kante) hat (vgl. Fig. 1). Durch diese Eigenschaft, daß sich das Probenzuführteil erfindungsgemäß dadurch auszeichnet, daß es an der der Probenbearbeitungsvorrichtung zugewandten Seiten gerade ist und keinerlei Zähne aufweist, läßt sich die Anzahl der zu analysierenden Proben bei vorgegebener Breite der Probenbearbeitungsvorrichtung deutlich erhöhen, indem diese in engstmöglichem Abstand nebeneinander auf dem Probenzuführteil aufgebracht werden können.

Unter einem porösen Material soll erfindungsgemäß ein Material verstanden werden, dessen Porengröße derart ist, daß das Probenmaterial zumindest bei der Probenzugabe auf das Probenzuführteil und bei der Probenabgabe in die Probenbearbeitungsvorrichtung im porösen Material in flüssiger Phase aufgrund von Kapillarkräften daran gehalten wird. Zwischenzeitlich kann das Probenmaterial in getrockneter Form in den Poren des porösen Materials vorliegen. Reaktionen zur chemischen Bindung des Probenmaterials an das Probenzuführteil sind ebensowenig erforderlich wie chemische Reaktionen zum Ablösen des Probenmaterials von dem Probenzuführteil. Da die Kapillarkräfte das Probenmaterial in der flüssigen Phase bei der Probenabgabe bis zum Übertritt in die Probenbearbeitungsvorrichtung halten, besteht auch keine Einschränkung in Bezug auf die Orientierung der Probenbenarbeitungsvorrichtung. Der Abschnitt des Probenzuführteils, das das Probenmaterial aufnimmt, besteht vorzugsweise durchgängig aus pörosem Material. Die übrigen Abschnitte des Probenzuführteils unterliegen keiner Beschränkung und können aus den für diese Gegenstände üblichen Plastikmaterialien sein. Andererseits kann das Probenzuführteil auch vollständig aus dem porösem Material bestehen.

Bevorzugt wird ein poröses Material mit einer mittleren Porengröße unter 100 µm, vorzugsweise unter 10 µm, am besten unter 1-2 µm, eingesetzt bzw. mit einer mittleren Porengröße zwischen 1,2 und 0,2 µm, am besten bei etwa 0,45-0,50 µm. Derartiges poröses Material weist für die üblicherweise eingesetzten Probenmaterialien, insbesondere im biochemischen Bereich, ausreichend hohe Kapillarkräfte auf.

Als besonders geeignetes poröses Material wurden hydrophile Matrices, die vorzugsweise ungeladen oder negativ geladen sind, identifiziert. Insbesondere wurden von den Erfindern herausgefunden, daß poröse Membranen, welche an ihrer Oberfläche hydrophil und ungeladen oder negativ geladen waren, bei der Auftrennung von Nukleinsäuren/Proteinen, die mit hydrophoben Farbstoffen markiert waren, besonders gute Ergebnisse lieferten.

Für die Erfindung verwendbare Membranen können ausgewählt werden aus:
- - Nylon: (ungeladenes hydrophiles Grundmaterial, das ggf. durch negativ geladene Gruppen, z.B. Carboxyl- oder Hydroxylgruppen, oberflächenmodifiziert ist)
- - Polyethersulfone: (ungeladenes hydrophiles Grundmaterial, das ggf. durch negativ geladene Gruppen, z.B. Carboxyl- oder Hydroxylgruppen oberflächenmodifiziert ist)
- - modifiziertes Polyvinylidenfluorid: (hydrophobes Grundmaterial, das durch Oberflächenmodifikation einen hydrophilen Charakter erhält)
- - Cellulose-Acetat: (ungeladenes hydrophiles Grundmaterial, das ggf. durch negativ geladene Gruppen, z.B. Carboxyl- oder Hydroxylgruppen oberflächenmodifiziert ist)
- - Cellulose-Mischester: (ungeladenes hydrophiles Grundmaterial, das ggf. durch negativ geladene Gruppen, z.B. Carboxyl- oder Hydroxygruppen oberflächenmodifiziert ist)
- - regenerierte Cellulose: (ungeladenes hydrophiles Grundmaterial, das ggf. durch negativ geladene Gruppen, z.B. Carboxyl- oder Hydroxylgruppen oberflächenmodifiziert ist)

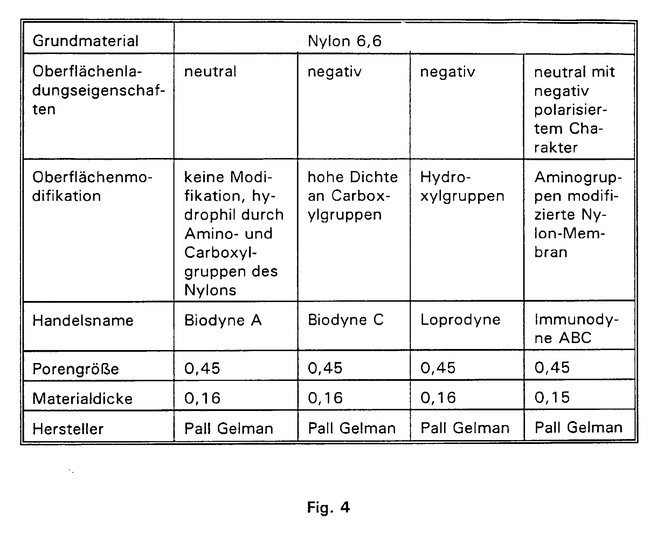

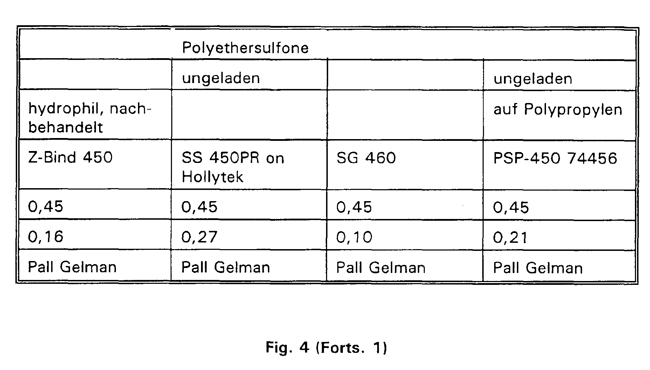

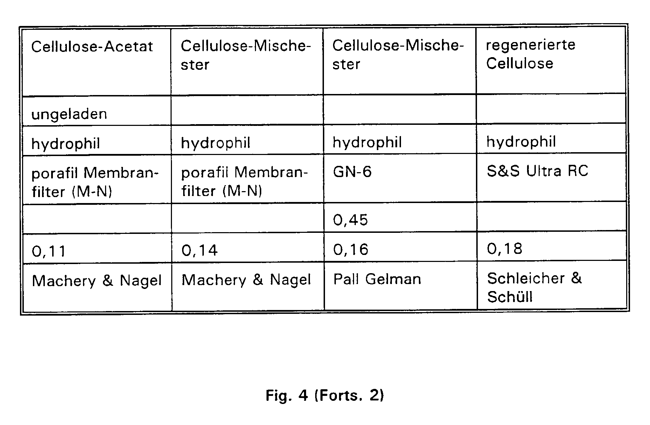

Verfahren zur Oberflächenmodifikation sowie die Auswahl geeigneter modifizierender Gruppen für diese Membranen sind dem Fachmann hinreichend bekannt. Außerdem sind die meisten Membranen in geeignet modifizierter Form bereits käuflich erhältlich (vgl. Fig. 4).

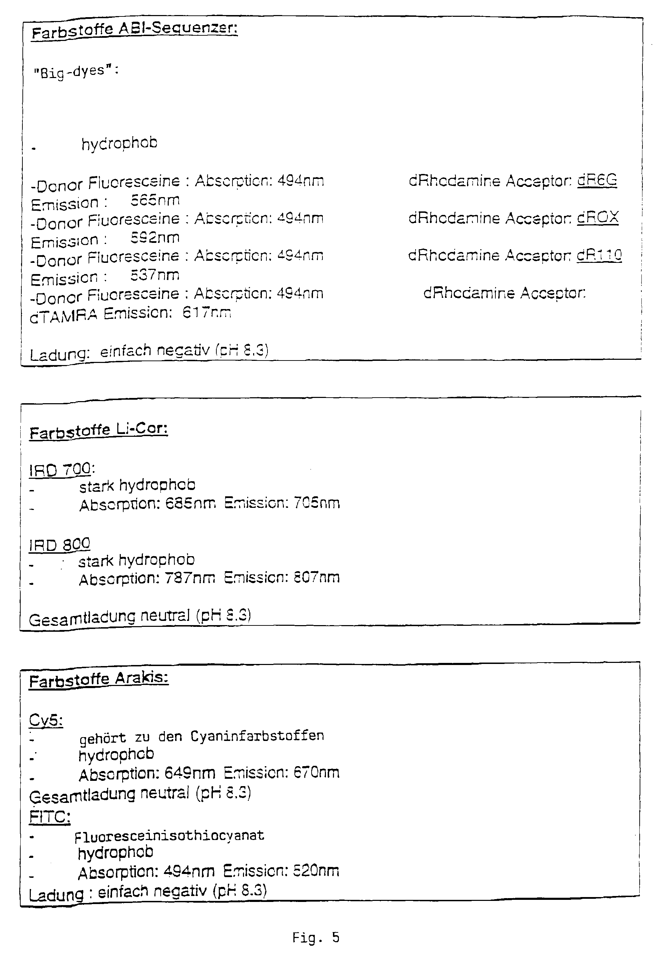

Unter dem Begriff "hydrophobe Farbstoffe" sollen alle farbgebenden Substanzen verstanden werden, die hydrophobe Eigenschaften haben und als Markierung an Biomolekülen befestigt werden können. Je nach gewählter Auftrennungs- bzw. Sequenzierungsmethode müssen verschiedene Farbstoffe ausgewählt werden. Eine Zusammenstellung bevorzugter Farbstoffe sind in Fig. 5 gezeigt.

Von den Erfindern wurden eine Reihe von Membranen als poröse Materialien, die bisher für andere Zwecke, wie Filtration oder ELISA, bekannt waren, für die Elektrophorese getestet. Es stellte sich heraus, daß eine Nylonmembran, welche an ihrer Oberfläche mit zusätzlichen Hydroxyl- oder Carboxylgruppen modifiziert worden ist, bei Nukleinsäuresequenzierungen, bei dem die stark hydrophoben Farbstoffe IRD700 oder IRD800 (Fa. Li-Cor) eingesetzt wurden, sehr gute Ergebnisse liefert. Dies ist beispielsweise "Biodyne C" oder "Loprodyne" der Fa. Pall gelman. Wurde die Markierung mit den Farbstoffen FlTC (Fa. Pharmacia-Upjohn) oder Cy5 (Fa. Pharmacia-Upjohn) vorgenommen, stellte sich eine hydrophile Grundmatrix ohne zusätzliche Ladungsträger (z.B. eine nicht oberflächenmodifizierte Nylonmembran oder ein Cellulose-Mischester) als am bevorzugtesten heraus. Dies ist beispielsweise "Biodyne A" (Fa. Pall gelman) oder "Porafil Membranfilter M-N" (Fa. Machery-Nagel).

Um eine Probenabgabe vom Probezuführteil an die Probenbearbeitungsvorrichtung zu erzwingen, kann man ein den porösen Materialabschnitt durchsetzendes elektrisches Feld erzeugen, um einen Fluß elektrisch geladener Moleküle, Makromoleküle oder Teilchen des Probenmaterials vom porösen Materialabschnitt in die Probenbearbeitungsvorrichtung zu bewirken. Die Stärke des elektrischen Felds wird in Abhängigkeit von der elektrischen Ladung so gewählt, daß die Kapillarkräfte überwunden wurden. Besonders vorteilhaft ist die Anwendung dieses Verfahrensschritts bei der Elektrophorese, da dort sowieso die Mittel zur Erzeugung des elektrischen Feldes vorgesehen sind.

Da das mit dem Probenmaterial beladene Probenzuführteil einfach handbar ist, ergibt sich die vorteilhafte Möglichkeit, daß man nach der Zugabe der Probe das Probenzuführteil von der Probenzugabestelle zur Probenbearbeitungsvorrichtung transportiert. Die Zugabe der Probe kann also an einem beliebig von der Probenbearbeitungseinrichtung entfernten Ort vor sich gehen.

Ist das Probenzuführteil vollständig aus porösem Material, ist es möglich, das Probenmaterial an beliebiger Stelle auf dem Probenzuführteil aufzutragen und die sich ausgebildeten Kapillarkräfte für den Probentransport sorgen zu lassen. Es versteht sich aber von selbst, daß Proben nur auf porösen Materialabschnitten aufgetragen werden und das Probenzuführteil nachfolgend bis zur Kante aus porösem Material besteht, um den Übertritt der Probe ins Trennmittel zu gewährleisten.

Auf dem Probenzuführteil kann man aber auch die Möglichkeit des Mischens gezielt ausnutzen, indem man das poröse Material an verschiedenen Steilen oder nacheinander an der gleichen Stelle mit den zu vermischenden Substanzen benetzt.

Aufgrund der angesprochenen einfachen Handhabbarkeit sowie der relativ hohen Probenmaterialkapazität der porösen Materialabschnitte besteht die Möglichkeit, daß man bei einer Probenbearbeitungsvorrichtung eine entsprechende Vielzahl poröser Materialabschnitte einsetzt.

Es können, wie erwähnt, jeweils für sich gesonderte Materialabschnitte eingesetzt werden mit dem Vorzug strikter Trennung, ohne die Gefahr eines Übersprechens. Herstellung und Handhabung der Materialabschnitte vereinfacht sich jedoch dann wesentlich, wenn das Probenzuführteil erfindungsgemäß einen Materialabschnittsträger umfaßt, welcher die Materialabschnitte in einer der geometrischen Anordnung der Probenannahmestellen entsprechenden Anordnung trägt. Es ist auch möglich auf dem porösen Material des Probenzuführteils Abschnitte zu definieren, auf die die Probe manuell oder automatisiert aktiv aufgetragen werden kann und welche, die für einen Probenmaterialauftrag, z.B. durch Aufbringen einer Beschichtung, gesperrt sind. Die gesperrten Bereiche sind dabei vorzugsweise hydrophob, während die Probenauftragsbereiche vorzugsweise hydrophil sind. Diese unterschiedlichen Bereiche können mehr oder weniger groß sein und können abwechseln.

Besonders einfach läßt sich das Probenzuführteil herstellen, beispielsweise durch Stanzen, wenn dieses ein sämtliche poröse Materialabschnitte aufweisendes Blatt aus porösem Material umfaßt.

Die Probenannahme des Probenmaterials durch die Probenbearbeitungseinrichtung unter Einwirkung des genannten elektrischen Feldes setzt eine elektrische Ladung der zu bewegenden Substanzen voraus. Diese Ladung kann bei biologischen Makromolekülen in gewünschter Weise erhalten werden, indem man den pH-Wert der flüssigen Phase in entsprechender Weise einstellt.

Es hat sich herausgestellt, daß unter dem elektrischen Feld praktisch das gesamte Probenmaterial vom Probenzuführteil abgegeben und der Probenbearbeitungseinrichtung zugeführt wird. Dies eröffnet die Möglichkeit, daß man das Probenzuführteil mehrmals hintereinander zur Zuführung von Probenflüssigkeit einsetzt. Der Aufwand für die Durchführung des erfindungsgemäßen Verfahrens wird hierdurch wiederum reduziert.

Das Probenzuführteil kann auf eine Vielzahl von Arten beladen werden, von denen beispielhaft die folgenden Auftragsvorrichtungen erwähnt seien:
- - Piezopipette:: Volumina bis in den Nanoliterbereich können aufgebracht werden,
- - Kapillare:: Schmalste Röhrchen nehmen durch Kapillarkräfte Probenmaterial auf, das durch Berührung mit dem porösen Material auf dem Probenzuführteil an dieses abgegeben wird,
- - Nadel:: Die Nadel nimmt das Probenmaterial durch Adhäsionskräfte an der Spitze auf und gibt es bei Berührung mit dem porösen Material des Probenzuführteils an dieses wieder ab,
- - Dispenser:: Arbeitet nach dem Unterdruck-Prinzip, Volumina von 0,5 bis 1µl können genau aufgenommen und abgegeben werden.

Bevorzugt erfolgt der Auftrag des Probenmaterials auf das Probenzuführteil automatisiert, da damit erwartungsgemäß eine genauere Auftragsfront erreicht werden kann, was gerade für Sequenzierungsreaktionen wünschenswert ist. Hierzu kann ein Pipettierroboter verwendet werden. Gängige Geräte sind der Biomek 2000 (Beckman Instruments) oder der Tekan Genesis RSP 200 (Fa. Tekan). Aber auch die manuelle Aufbringung des Probenmaterials ist möglich. Bevorzugt von den obigen Auftragungsmöglichkeiten ist der Auftrag mittels Piezopipette. d.h. einem Dispenser ähnlich zu denen, die als Tintenstrahldrucker bekannt sind.

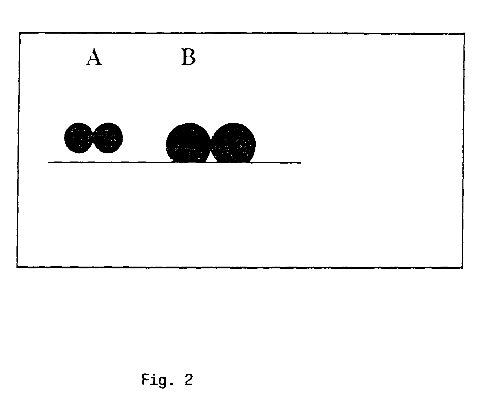

Es hat sich als vorteilhaft herausgestellt, die Proben nicht zu dicht an der geraden Kante des Probenzuführteils aufzubringen, da dann leicht die Möglichkeit besteht, daß die Flüssigkeit entlang der Kante diffundiert. Dies kann zur Vermischung der Proben sowie zu einer Verbreiterung der Probenfront führen (vgl. Fig. 2). Es ist hingegen gewünscht, das Probenmaterial in exaktem Volumen mit definiertem Abstand zueinander sowie zur Kante des Probenzuführteils aufzutragen. Dabei hat sich ein Abstand von 0 bis 1000 µm (wobei der obere Parameter als offen anzusehen ist, abhängig von der Anzahl der aufzutragenden Proben und der Größe des Probenzuführteils), bevorzugt größer 0,1 µm, zueinander sowie von 0 bis 900 µm zur Kante, bevorzugt etwa 0,2-0,8 mm, ganz besonders bevorzugt 0,5 mm, bewährt. Die aufzutragenden Probenvolumina betragen 10 nl bis 5 µl, bevorzugt 0,1 bis 1 µl, ganz bevorzugt 0,2 bis 0,5 µl. Für den Fall, daß der automatisierte Auftrag der Proben auf einen herkömmlichen porösen Kamm mit Zähnen erfolgt, sei dies mittels Nadel, Spitze oder Piezopipette, ist es bevorzugt, dies direkt auf der "Zahnspitze" durchzuführen.

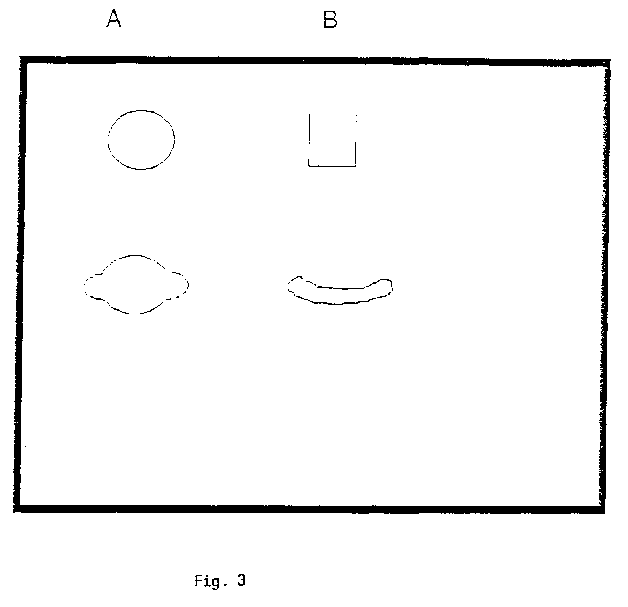

Das Verhalten der Probenfront hängt davon ab, ob ein punktförmiger Auftrag (wie erfindungsgemäß möglich) oder wie bisher üblich in eine Tasche/Zahn erfolgt ist (vgl. Fig. 3). Bei den bisher verwandten Verfahren werden die Zähne, die aus porösem Material bestehen, in eine mit Probenmaterial gefüllte Vorrichtung, d.h. ein separates speziell hergerichtetes Beladungsbehältnis, getaucht, das aus Polyacryl bestehen kann (Erfle et al., Nucleic Acids Research, 1997, Vol. 25, No. 11, S. 2229-2230). Hierbei wird die Vorrichtung vorab manuell oder automatisch befüllt. Da das Probenmaterial bei diesem Verfahren zunächst in ein Beladungsbehältnis getaucht werden muß, ist dieses Verfahren zeitaufwendiger als das erfindungsgemäße, direkt aktive Aufbringen mittels Nadel, Piezopipette, Spitze oder Kapillare.

Es hat sich erfindungsgemäß als vorteilhaft herausgestellt, das Probenmaterial mittels Nadel, Piezopipette, Kapillare oder Dispenser direkt auf das Kammaterial aufzutragen (Fig. 2 und 3), da hierbei die Flüssigkeitsmenge sowohl präziser reguliert wird als auch der Auftragspunkt exakter eingestellt werden kann. Die Aufnahme des Probenmaterials geschieht hier unter anderem mittels Adhäsionskräften und Kapillarkräften, was für sehr kleine Volumina von Vorteil ist. Wird die Probe erfindungsgemäß punktförmig auf ein Probenauftragsteil gebracht und eine Spannung angelegt, so wandert die Probenfront wie in Fig. 3A) aus, wobei die Sequenzkurvengeneration erleichtert wird, da ein zentrales Maximum vorhanden ist. Dieses zentrale Maximum wird auch bei der Auftrennung minimalster Volumina erreicht und die Banden besser auswertbar. Eine Probe, die in eine Tasche/Zahn aufgetragen worden ist, z.B. durch Eintauchen in einen Probenhalter und somit mittels passiver Aufnahme des Probenmaterials durch den Kamm, wandert nach Anlegen von Spannung wie in Fig. 3B) gezeigt. Diese Front hat kein zentrales Maximum, was nicht vorteilhaft ist. Zudem ist es nicht möglich, die aufgenommene Volumenmenge genau zu steuern.

Das beschriebene Verfahren kann für eine Vielzahl von Probenbearbeitungseinrichtungen, insbesondere zum Nachweis und/oder zur Herstellung eines biochemischen Reaktionsprodukts, eingesetzt werden. Ein weiteres Anwendungsbeispiel ist ein Massenspektrometer. Besonders bevorzugt ist der Einsatz für die Zuführung von Probenflüssigkeit für eine Elektrophoreseeinrichtung oder eine Chromatographieeinrichtung, insbesondere bei der Auftrennung von Biomolekülen (z.B. Nukleinsäuren und Proteine), z.B. bei Southern, Northern bzw. Western Blot sowie bei Sequenzierungsrektionen.

Dabei kann das Trennmittel, vorzugsweise Trenngel, der Elektrophoreseeinrichtung nicht nur, wie bisher, vertikal orientiert sein, sondern auch horizontal oder in beliebiger Raumorientierung.

Um möglichst hohe Trennschärfe bei geringem Materialeinsatz an Trennmittel zu erhalten, werden möglichst geringe Trennmitteldicken angestrebt. So liegen Trenngeldicken vielfach bei 0,5 mm und darunter. Das korrekte Einführen des erfindungsgemäßen Probenzuführteils zwischen die das Trennmittel zwischen sich haltenden Platten ist aber sehr viel leichter als bei den üblicherweise verwendeten Kämmen, da das erfindungsgemäße Probenzuführteil ohne "Zähne" nicht so verbiegbar und empfindlich ist. Ein weiterer Vorteil ist, daß nach Einsetzen des Probenzuführteils ein exakter Abstand zum Trennmittel gegeben ist, was bei der Verwendung von "Zahnkämmen" in den seltensten Fällen gegeben ist.

Es wird in einer bevorzugten Ausführungsform vorgeschlagen, daß ein Volumenbereich zwischen Probenzuführteil und Trennmittel mit einer elektrischen isolierenden und/oder höheren Dichte als Wasser aufweisendenden Flüssigkeit, vorzugsweise Ficoll®-Lösung oder Dextran-Lösung, ausgefüllt ist. Die Präzision der Elektrophoresemessung, insbesondere die Trennschärfe der Banden, wird durch diese Maßnahme wiederum verbessert. Dies mag darauf zurückzuführen sein, daß die erhöhte Dichte der Flüssigkeit ein Herauswandern der Biomoleküle aus dem porösen Probenzuführteil an sich erschwert, so daß erst bei Anlegen des elektrischen Feldes, d.h. zu einem wohl definierten Zeitpunkt, die Biomoleküle in die Flüssigkeit eindringen. Der Einsatz der elektrisch isolierenden Flüssigkeit mag den Effekt haben, daß bis auf die Wanderung der Biomoleküle keine Ionenwanderung stattfindet, was zumindest im Bereich der Abschrägung ansonsten zu einer Beeinträchtigung der Homogenität des elektrischen Feldes führen könnte und damit auch zu einer Verschlechterung der Auflösung.

Weiter wird vorgeschlagen, daß man eine flüssige Phase, vorzugsweise Pufferlösung, in einen Bereich an einem Zugabeenede eines Trennmittels der Elektrophoreseeinrichtung bzw. Chromatographieeinrichtung zugibt und zwar vor oder nach dem Heranführen des Probenzuführteils. Im Falle eines zwischenzeitlich getrockneten Probenzuführteils dient die flüssige Phase dazu, das in den Poren reversibel absorbierte Probenmaterial innerhalb der Poren zu lösen. Die dann auftretenden Kapillarkräfte halten das Probenmaterial in den Poren solange keine äußeren Kräfte angreifen, wie die elektrischen Feldkräfte der Elektrophoreseeinrichtung. Durch die Zugabe der flüssigen Phase, insbesondere Pufferlösung, läßt sich somit der früheste Beginn der Probenmaterialwanderung festlegen; dies gilt auch dann, wenn das Probenmaterial nicht zwischenzeitlich getrocknet wurde.

Aufgrund der Einwirkung des elektrischen Feldes ist ein unmittelbarer Übergang des Probenmaterials in das Trennmittel möglich; aufgrund der Anwesenheit der flüssigen Phase, vorzugsweise Pufferlösung, kann zwischen dem Probenzuführteil und dem zugabeende des Trennmittels jedoch auch ein Abstand bis zu mehreren Millimetern bestehen. Vorteilhaft ist, daß erfindungsgemäß der Austritt von Probenmaterial aus dem Probezuführteil und damit der Eintritt in das Elektrophoresegel ausschließlich durch das elektrische Feld ausgelöst wird mit erzwungener Wandrung der geladenen Teilchen in Feldrichtung. Eine anderweitige Bewegung, insbesondere Diffusionsbewegung in Querrichtung, wird von vornherein unterbunden.

Die beschriebenen Vorteile der Erfindung kommen wenigstens zum Teil auch dann zum Tragen, wenn sie zur Zuführung von Probenflüssigkeit zu einer mehrere Trennkapillaren aufweisenden Elektrophoreseeinrichtung oder Chromatographieeinrichtung eingesetzt wird. Auch hier ist eine hohe Probendichte bei einfacher Handhabung realisierbar.

In einer ganz bevorzugten Ausführungsform handelt es sich bei der Probenbearbeitungsvorrichtung um eine Gelelektrophorese-Apparatur zur Sequenzierung von DNA, in der ein übliches Polyacrylamidgel (ca. 5-10 %ig) zwischen zwei Glasplatten als Trennmittel gegossen worden ist. Um am oberen Anschluß eine einzige Geltasche zu erhalten, wird ein dem Probenzuführteil gleichender Platzhalter bis zur Auspolymerisierung des Gels eingeführt. Das Probenzuführteil ist in seiner Größe den verwendeten Glasplatten angepaßt und weist vorzugsweise an allen Kanten einen geraden Abschluß auf (vgl. Fig. 1). Das Probenzuführteil ist ganz oder teilweise aus dem porösen Material gefertigt und ca. 0,5 mm von der unteren Kante werden auf dem porösen Material die zu sequenzierenden Proben in einem Abstand von ca. 0,5 mm von der Kante mit einer Piezopipette aufgetragen. Nach kurzem Antrocknen der Proben wird der Platzhalter aus dem Gel entfernt und das Probenzuführteil eingesetzt. Zur Durchführung der Elektrophorese wird eine entsprechende Spannung angelegt.

Das Verfahren kann auch zur Zuführung von Probenflüssigkeit zu einer Mikrochip-Anordnung eingesetzt werden, wobei dann das Probenzuführteil bzw. mehrere Probenzuführteile in Form gesonderter Materialabschnitte auch ortsfest sein können, um unzugängliche Sensorbereiche mit Abmessungen beispielsweise von 2 mm x 2 mm mit besser zugänglichen Zugabestellen dauernd zu verbinden.

Die Erfindung betrifft auch eine Elektrophoreseeinrichtung mit Probenzuführteil zur Durchführung des genannten Verfahrens, wobei, wie ebenfalls bereits erwähnt, neben der bisher vertikalen Anordnung auch eine horizontale Anordnung bzw. eine beliebige Anordnung des Trenngels möglich ist.

Diese Elektrophoreseeinrichtung mit einem zumindest teilweise porösen Probenzuführteil, das an der Elektrophoreseeinrichtung zugewandten Seite gerade ist, umfaßt ein Trennmittel, vorzugsweise Trenngel, und eine Elektrofeld-Anordnung zum Anlegen eines elektrischen Feldes an das Trennmittel.

Die obigen Definitionen und Bedingungen gelten für die Bestandteile der Elektrophoresevorrichtung entsprechend.

Für die in der Anmeldung bevorzugteste Anwendung, die DNA-Sequenzierung, seien als Analysemethoden beispielhaft die DNA-Detektion mittels eines Sequenzierautomaten der Fa. Li-Cor oder Fa. ABl oder Arakis-EMBL genannt. Der Sequenzierautomat der Fa. Fa. Li-Cor besteht aus einer vertikalen Gelelektrophorese-Apparatur, wobei am Ende ein Laser zum Anregen der mit einem Farbstoff markierten Nukleinsäure und ein Detektor (Photomultiplier, Photodiode) zur Aufnahme des emittierten Lichts vorhanden ist. Das Arakis-EMBL-System benutzt Detektorarrays, d.h. das Aufnahmesystem ist stationär und besteht aus 384 in Reihe angeordneten Einzeldioden auf 300 mm. Beide Methoden lassen sich in ihrer Effizienz dadurch steigern, daß mit dem erfindungsgemäßen Probenzuführteil bei einem einzigen Sequenzlauf jetzt mehr Proben aufgetragen werden können. Beide Methoden waren nämlich bisher in ihrem Wirkungsgrad dadurch beschränkt, daß beim Auftrag der Proben wegen der nicht mehr weiter zu verringernden "Taschengröße" nur eine begrenzte Anzahl Proben nebeneinander angeordnet und somit analysiert werden konnten. Die elektronischen Voraussetzungen zur Steigerung des Durchsatzes waren dagegen bereits von Anfang an gegeben. Bei der vorliegenden Erfindung jedoch braucht nun auf "Taschengrößen" keine Rücksicht mehr genommen werden. Die Proben können, wie oben beschrieben, so eng wie möglich nebeneinander aufgebracht werden. Die Probenvolumina betragen 10 nl bis 5 µl, bevorzugt 0,1 bis 1 µl, ganz bevorzugt 0,2 bis 0,5 µl.

Zusammenfassend bietet die vorliegende Erfindung die Vorteile, daß das Probenzuführteil dadurch, daß es keine Zähne aufweist, sehr leicht zugeschnitten werden kann und an die Probenbearbeitungsvorrichtung angepaßt werden kann. Durch die gerade Kante kann es einfach und ohne großen Zeitaufwand in das Trennmittel einer Probenbearbeitungsvorrichtung, z.B. das Gel in einer Elektrophorese-Apparatur, eingeführt werden. Es ist eine höhere Ladungsdichte erreichbar und es wird eine bessere Signalstärke auf kleinerem Raum erreicht. Die Beladung des Probenzuführteils kann voll automatisiert durchgeführt werden.

Die Erfindung wird weiter anhand der Figuren beschrieben, welche zeigen:
Fig. 1 Erfindungsgemäßes Probenzuführteil in Gelelektrophoresevorrichtung
Fig. 2 Auftrag von Probenmaterial auf ein Probenzuführteil
   (A) Auftrag in der Mitte (bevorzugt)
   (B) Auftrag dicht an der Kante
Fig. 3 Verhalten der Probenfront
Fig. 4 Zusammenstellung erfindungsgemäß verwendbarer poröser Materialien
Fig. 5 Hydrophobe Farbstoffe
Fig. 6 Sequenzierungsergebnis
Fig. 7 Sequenzierungsergebnis

Die Erfindung wird weiter anhand der nachfolgenden Beispiele beschrieben:

### Beispiel 1: Sequenzierung für Li-Cor

### Li-Cor-Reaktionen:

- 1 µl AmpliTaq FS DNA Polymerase:
- 1µl DNA: (pBluescript-Derivat, Insert-Größe 2 kB) (1 µg/µl)
- 1 µl Reverse Primer: (2 µM) mit IRD-700 markiert (5'-CAGT GAA ACA GCT ATG AC-3')
- 1 µl Universal Primer: (2 µM) mit IRD-800 markiert (5'-CGA CGT TGT AAA ACG ACG GCC AGT-3')
- 2 µl 10 x Sequenzierungspuffer: (50 mM MgCl₂/125 mM Tris/150 mM (NH₄)₂SO₄)
- 14 µl H₂O:

Es wurden jeweils 4,5 µl des Gemischs auf vier Röhrchen verteilt, welche mit A, C, G oder T beschriftet waren und 2 µl des jeweiligen Terminationsmixes (dNTP/ddNTP) enthielten. Der A-Mix enthielt 1 mM dATP, 1 mM dCTP, 0,4 mM dGTP, 1,6 mM dlTP, 1 mM dTTP, 5 µM ddATP; der C-Mix enthielt 1 mM dATP, 1 mM dCTP, 0,4 mM dGTP, 1,6mM dlTP, 1 mM dTTP, 5 µM ddCTP; der G-Mix enthielt 1 mM dATP, 1 mM dCTP, 0,4 mM dGTP, 1,6mM dlTP, 1 mM dTTP, 2,75 µM ddGTP und der T-Mix enthielt 1 mM dATP, 1 mM dCTP, 0,4 mM dGTP, 1,6mM dlTP, 1 mM dTTP, 5 µM ddTTP.

Die so angesetzten Reaktion wurden wie folgt gecycelt: 30 mal mit den Schriften 95°C, 30˝; 55°C, 20˝; und 68°C, 30˝. Der Reaktion wurde dann 1 ml Loadingdye (Bestellnummer 79448; Fa. Amersham) zugesetzt und die Reaktion für 20 Minuten bei 65°C. Etwa 0,2 µl jeder Reaktion (A,C,G und T) wurden auf das Kamm-Material (Loprodyne^{R}, Art. Nr. LPNXG3R, Firma Pall Gelmann Science) geladen und auf die Elektrophoreseapparatur (Fa. Li-Cor) gebracht.

Folgende Beladungsmethoden wurden unter anderem evaluiert:

### Kamm mit Zähnen als Kontrolle:

Mit einer Kolbenhubpipette und einer Eppendorf-Pipette 0,2 µl auf einem üblichen Kamm mit Zähnen.

### Kamm ohne Zähne:

- Mit einem Roboter mit Piezotechnologie etwa 1 mm von der Kante (Volumen 0,2 µl)
- Mit einem Roboter mit Piezotechnologie etwa 0,5 mm von der Kante (Volumen 0,2 µl)
- Mit einer Pipette manuell etwa 0,5 mm von der Kante (Volumen 0,2 µl).

Der zur Verwendung kommende Piezoroboter stammt von der Firma Gesim (Gesellschaft für Silizium-Mikrosysteme mbH, Bautzner Landstraße D-01454 Großerkmannsdorf, Deutschland).

### Beispiel 2: Sequenzierung für Arakis

### Arakis-Reaktionen

- 1 µl Amplitaq-FS DNA Polymerase:
- 1 µl DNA: (pBluescript-Derivat, Insert-Größe ca. 2 kB) (1 µg/µl)
- 2 µl Reverse Primer: (2µM) mit FlTC gelabelt (5'-CAG GAA ACA GCT ATG AC-3')
- 1 µl Universal Primer: (2 µM) mit Cy5 gelabelt (5'-CGA CGT TGT AAA ACG ACG GCC AGT-3')
- 2 µl 10 x Sequenzierungspuffer: (50 mM MgCl₂/125 mM Tris/150 mM (NH₄)₂SO₄)
- 14 µl H₂O:

Es wurden jeweils 4,5 µl des Gemischs auf vier Röhrchen verteilt, welche mit A, C, G oder T beschriftet waren und 2 µl des jeweiligen Terminationsmixes (dNTP/ddNTP) enthielten. Der A-Mix enthielt 1 mM dATP, 1 mM dCTP, 0,4 mM dGTP, 1,6 mM dlTP, 1 mM dTTP, 5 µM ddATP; der C-Mix enthielt 1 mM dATP, 1 mM dCTP, 0,4 mM dGTP, 1,6mM dlTP, 1 mM dTTP, 5 µM ddCTP; der G-Mix enthielt 1 mM dATP, 1 mM dCTP, 0,4 mM dGTP, 1,6mM dlTP, 1 mM dTTP, 2,75 µM ddGTP und der T-Mix enthielt 1 mM dATP, 1 mM dCTP, 0,4 mM dGTP, 1,6mM dlTP, 1 mM dTTP, 5 µM ddTTP.

Die so angesetzten Reaktionen wurden wie folgt gecycelt: 30 mal (95°C, 30˝; 55°C, 20˝; 68°C, 30˝). Der Reaktion wurden dann 1 µl Loading-dye zugesetzt und die Reaktion für 20 Minuten bei 65°C. Etwa 0,2 µl jeder Reaktion (A, C, G und T) wurden auf das Kamm-Material (Biodyne A Art. Nr. BNXF500 Firma Pall Gelman Science) geladen und auf die Elektrophoreseapparatur (Li-Cor) gebracht.

Folgende Beladungsmethoden wurden unter anderem evaluiert:

### Kamm mit Zähnen als Kontrolle:

- Mit einer Kolbenhubpipette (Auftragsvolumen 0,2 µl)
- Mit einer Glaskapillare (Durchmesser: Eingang 0,75 mm, Ausgang 1,05) Auftragsvolumen 0,2 µl).
- Mit einer Pipettenspitze allein (ohne Pipette) (Auftragsvolumen 0,2 µl).

### Kamm ohne Zähne:

- Mit einer Glaskapillare (Auftragsvolumen etwa 0,2 µl).
- Mit einer Pipettenspitze allein (ohne Pipette) (Auftragsvolumen etwa 0,2 µl).

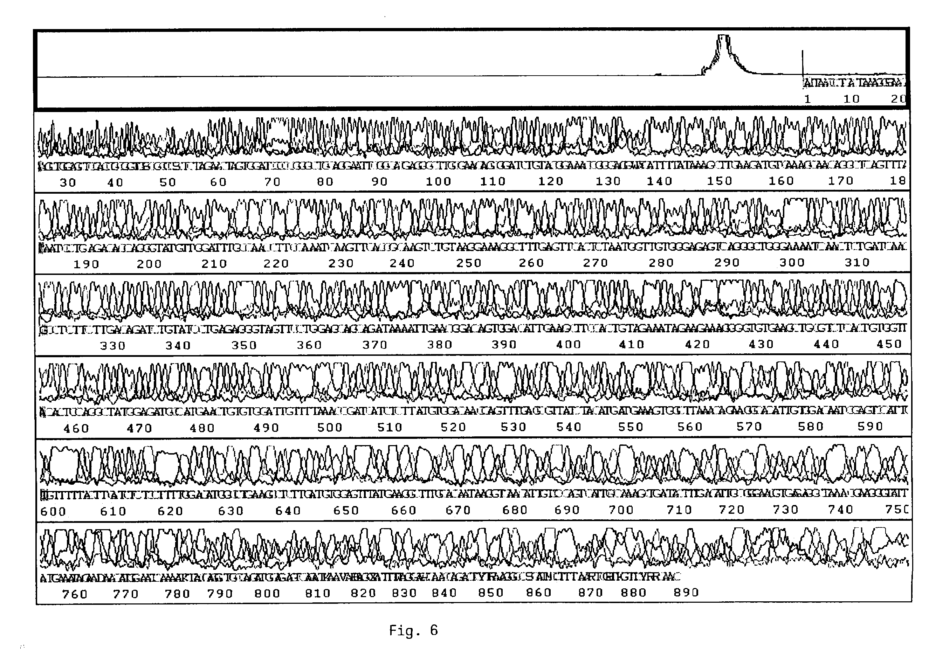

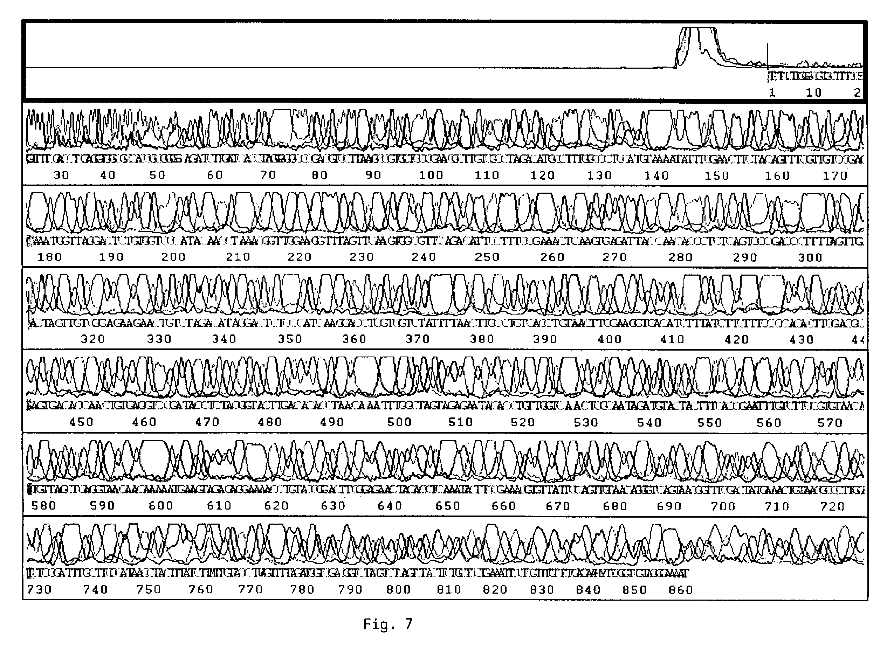

Bei den in beiden Beispielen durchgeführten Sequenzierungen zeigte sich, daß auf die Probenzuführteile (Kämme) ohne Zähne sehr viel mehr Proben nebeneinander aufgebracht werden konnten und die Länge der lesbaren Basenpaare zumindest mit den Kontrollen, bei denen Kämme mit Zähnen eingesetzt werden, vergleichbar ist. Typische Sequenzierungsergebnisse, die erreicht werden konnten, wenn Kämme ohne Zähne eingesetzt wurden und der Auftrag ca. 0,5 mm von der unteren Kante erfolgt war, sind in den Fig. 6 und 7 gezeigt. Es waren jeweils über 850 Basenpaare lesbar.

## Patentansprüche

1. Verfahren zur Zuführung von Probenmaterial mittels eines Probenzuführteils zu einer Probenbearbeitungsvorrichtung, dadurch gekennzeichnet, daß das Probenzuführteil, das mindestens einen Materialabschnitt aus porösem Material aufweist und an der der Probenbearbeitungsvorrichtung zugewandten Seite einen geraden Abschluß hat, in die Probenbearbeitungsvorrichtung eingeführt wird.

2. Verfahren nach Anspruch 1, dadurch gekennzeichnet, daß man das Probenmaterial nach Probenzugabe in das Probenzuführteil trocknet und daß man das Probenzuführteil vor der Probenabgabe einer flüssigen Phase zuführt.

3. Verfahren nach Anspruch 1 oder 2, dadurch gekennzeichnet, daß man ein den porösen Materialabschnitt durchsetzendes elektrisches Feld erzeugt, um einen Fluß elektrisch geladener Moleküle, Makromoleküle oder Teilchen des Probenmaterials vom porösen Materialabschnitt in die Probenbearbeitungseinrichtung zu bewirken.

4. Verfahren nach einem der vorhergehenden Ansprüche, dadurch gekennzeichnet, daß man poröses Material mit einer mittleren Porengröße unter 100 µm, vorzugsweise unter 10 µm, ganz bevorzugt 1 µm einsetzt.

5. Verfahren nach Anspruch 4, dadurch gekennzeichnet, daß man poröses Material mit einer mittleren Porengröße zwischen 1,2 µm und 0,2 µm, bevorzugt etwa 0,45 - 0,5 µm einsetzt.

6. Verfahren nach einem der vorhergehenden Ansprüche, dadurch gekennzeichnet, daß das poröse Material aus hydrophilen Matrices, die ungeladen oder negativ geladen sind, besteht.

7. Verfahren nach Anspruch 6, dadurch gekennzeichnet, daß die hydrophilen Matrices aus unmodifiziertem oder modifiziertem Nylon, Polyethersulfonen, hydrophil modifiziertes Polyvinylidenfluorid und Cellulose-Derivaten ausgewählt sind.

8. Verfahren nach Anspruch 7, dadurch gekennzeichnet, daß die Modifizierung der Matrices durch Aufbringen von Hydroxyl- oder Carboxyl-Gruppen auf der Oberfläche erfolgt.

9. Verfahren nach einem der vorhergehenden Ansprüche, dadurch gekennzeichnet, daß man den pH-Wert der flüssigen Phase derart einstellt, daß biologische Makromoleküle in der Probenflüssigkeit elektrisch geladen sind.

10. Verfahren nach einem der vorhergehenden Ansprüche, dadurch gekennzeichnet, daß man das Probenzuführteil mehrmals hintereinander zur Zuführung von Probenflüssigkeit einsetzt.

11. Verfahren nach einem der vorhergehenden Ansprüche, dadurch gekennzeichnet, daß die Probenbearbeitungsvorrichtung eine Elektrophoreseeinrichtung oder eine Chromatographieeinrichtung ist.

12. Verfahren nach Anspruch 11, dadurch gekennzeichnet, daß die Elektrophoreseeinrichtung ein horizontal oder vertikal orientiertes Trennmittel, vorzugweise Trenngel, aufweist.

13. Verfahren nach einem der vorhergehenden Ansprüche, dadurch gekennzeichnet, daß die Probenbearbeitungsvorrichtung eine Gelelektrophorese-Apparatur zur Sequenzierung von DNA ist.

14. Probenzuführteil zur Durchführung des Verfahrens nach einem der vorhergehenden Ansprüche mit wenigstens einem Materialabschnitt aus porösem Material und einem einer Probenbearbeitungsvorrichtung zugewandten geraden Abschluß.

15. Probenzuführteil nach Anspruch 14, dadurch gekennzeichnet, daß man poröses Material mit einer mittleren Porengröße unter 100 µm, vorzugsweise unter 10 µm, genz bevorzugt 1 µm einsetzt.

16. Probenzuführteil nach Anspruch 14 oder 15, dadurch gekennzeichnet, daß man poröses Material mit einer mittleren Porengröße zwischen 1,2 µm und 0,2 µm, bevorzugt etwa 0,45 - 0,5 µm einsetzt.

17. Probenzuführteil nach einem der Ansprüche 14-16, dadurch gekennzeichnet, daß das poröse Material aus hydrophilen Matrices, die ungeladen oder negativ geladen sind, besteht.

18. Probenzuführteil nach einem der Ansprüche 14-17, dadurch gekennzeichnet, daß die hydrophilen Matrices aus unmodifiziertem oder modifiziertem Nylon, Polyethersulfonen, hydrophil modifizoertem Polyvinylidenfluorid und Cellulose-Derivaten ausgewählt sind.

19. Probenzuführteil nach einem der Ansprüche 14-18, dadurch gekennzeichnet, daß die Modifizierung der Matrices durch Aufbringen von Hydroxyl- oder Carboxyl-Grupßpen auf der Oberfläche erfolgt.

20. Probenzuführteil nach einem der Ansprüche 14-19, dadurch gekennzeichnet, daß es eingeteilt ist in Bereiche, auf die eine Probe aufgetragen werden kann und Bereiche, die für einen Probenauftrag gesperrt sind.

21. Probenzuführteil nach einem der Ansprüche 14-20, dadurch gekennzeichnet, daß auf das Probenzuführteil in seinem porösen Abschnitt mittels einer Auftragsvorrichtung in einem definierten Abstand Proben aufgebracht werden.

22. Elektrophoreseeinrichtung mit einem porösen Probenzuführteil, umfassend ein Trennmittel, vorzugsweise Trenngel, und eine Elektrofeld-Anordnung zum Anlegen eines elektrischen Feldes an das Trennmittel, dadurch gekennzeichnet, daß das in die Elektrophoreseeinrichtung eingesetzte poröse Probenzuführteil einen geraden Abschluß aufweist.
